# EUROPÄISCHE PATENTSCHRIFT

(11) **EP 0 628 744 B1**
(45) Veröffentlichungstag und Bekanntmachung des Hinweises auf die Patenterteilung: **09.04.1997**
(21) Anmeldenummer: 94108603.5
(22) Anmeldetag: 06.06.1994
(51) Int. Cl.: F16D 65/12, F16D 55/228

(54) **Festsattel-Scheibenbremse**
Fixed caliper disc brake
Frein à disque à étrier fixe

(30) Priorität: 05.06.1993 DE 4318747
(43) Veröffentlichungstag der Anmeldung: 14.12.1994
(73) Patentinhaber: ITT Automotive Europe GmbH, 60488 Frankfurt am Main (DE)
(72) Erfinder: Gerhardt, Winfried, D-60489 Frankfurt/Main (DE); Hennemann, Karl-Heinz, D-61352 Bad Homburg (DE); Leidecker, Hans-Dieter, D-65931 Frankfurt/Main (DE)

(56) Entgegenhaltungen:
- DE-C- 4 113 457
- GB-A- 812 003

## Beschreibung

Die Erfindung betrifft eine Festsattel-Scheibenbremse für Kraftfahrzeuge gemäß dem Oberbegriff des Patentanspruchs 1.

Eine gattungsgemäße Scheibenbremse ist aus der DE-C-4 113 457 bekannt. Diese bekannte Scheibenbremse wird zur Montage am Achsschenkel des Fahrzeugs auf die bereits montierte Bremsscheibe gesteckt und anschließend mit dem Achsschenkel fest verschraubt.

In der Praxis werden vom Bremsenhersteller geringfügig verschiedene Bremssättel desselben Typs, die mit bloßem Auge kaum zu unterscheiden sind, an den Fahrzeughersteller zur Endmontage am Fahrzeug geliefert. Die Bremssättel unterscheiden sich im wesentlichen darin, daß sie zum Zusammenwirken mit geringfügig verschieden dicken Bremsscheiben beispielsweise für verschiedene Fahrzeuge desselben Herstellers bestimmt sind. Deshalb kann es unter Umständen zu Verwechslungen kommen, wobei ein für eine dicke Bremsscheibe bestimmter Bremssattel mit einer dünneren Bremsscheibe zusammengebaut wird. Eine solche Kombination wird im allgemeinen zum Versagen der Bremse führen und muß deshalb unbedingt vermieden werden.

Aufgabe der Erfindung ist es, eine gattungsgemäße Festsattel-Scheibenbremse zu verbessern, so daß ein Einbau eines bestimmten Typs von Bremssattel am Fahrzeug nur in Verbindung mit einer auf den Bremssattel abgestimmten Bremsscheibe möglich ist.

Die Lösung der Aufgabe ergibt sich aus dem kennzeichnenden Teil des Patentanspruchs 1. Die erfindungsgemäße Lösung besteht im Prinzip darin, daß zwischen Bremssattel und Bremsscheibe ein schlüsselartiger Eingriff vorgesehen ist, der einen Einbau eines falschen Bremssattels absolut sicher verhindert, indem der Schlüssel dafür sorgt, daß man den falschen Bremssattel nicht in seine korrekte Einbaulage bringen kann. An einem Brückenabschnitt des Bremssattels der sich in unmittelbarer Nähe des äußeren Randes der Bremsscheibe erstreckt, ist ein radial nach innen ragender Vorsprung vorgesehen, der in eine umlaufende Ringnut der Bremsscheibe eingreift, wenn der richtige Bremssattel mit der zugehörigen Bremsscheibe kombiniert wird. Eine falsche Bremsscheibe hat keine Ringnut oder eine Ringnut die axial gegenüber dem Vorsprung versetzt angeordnet ist. Bei einem Einbauversuch kann der Vorsprung eines falschen Bremssattels nicht in die Ringnut eingreifen, so daß der Bremssattel daran gehindert ist, seine korrekte radiale Position einzunehmen. In diesem Fall ist es unmöglich, die zur Befestigung des Bremssattels am Achsschenkel vorgesehenen Schraube stecken, bzw. festzudrehen.

Wenn man gemäß Anspruch 2 die axiale Position der Ringnut im Rand der Bremsscheibe in Abhängigkeit von der Dicke der Bremsscheibe bestimmt, kann man selbst bei mehreren verschiedenen Bremsscheibendicken eine eindeutige Zuordnung von Bremssattel und Bremsscheibe ermöglichen und jede falsche Montage ausschließen.

In einer hinsichtlich der Fertigungskosten besonders günstigen Ausführungsform gemäß Anspruch 3, ist der radiale Vorsprung vorzugsweise beim Gießen des Bremssattels mit diesem einstückig ausgebildet.

Eine zweite Ausführungsmöglichkeit für den Vorsprung gemäß Anspruch 4 eignet sich insbesondere zur Nachrüstung älterer Bremssättel. Der Vorsprung wird dabei von einem Stift gebildet, der teilweise in eine Bohrung des Brückenabschnitts eingesteckt und somit befestigt ist.

Ausführungsbeispiele der Erfindung werden nachfolgend anhand der Zeichnung näher erläutert.

Es zeigen:
- Fig. 1: eine Draufsicht auf eine Festsattel- Scheibenbremse,
- Fig. 2: eine gemäß Linie B-B von Fig. 1 geschnittene Teilansicht des erfindungsgemäßen Bremssattels in Kombination mit einer dazugehörigen Bremsscheibe,
- Fig. 3: wie Fig. 2 jedoch mit einer geringfügig dünneren Bremsscheibe, die nicht zu dem Bremssattel paßt,
- Fig. 4: eine gemäß Linie A-A von Fig. 1 geschnittene Teilansicht des erfindungsgemäßen Bremssattels mit einem angegossenen Vorsprung,
- Fig. 5: eine Teilansicht wie Fig. 4, jedoch mit einem als Stift ausgebildeten Vorsprung, der in einer Bohrung steckt.

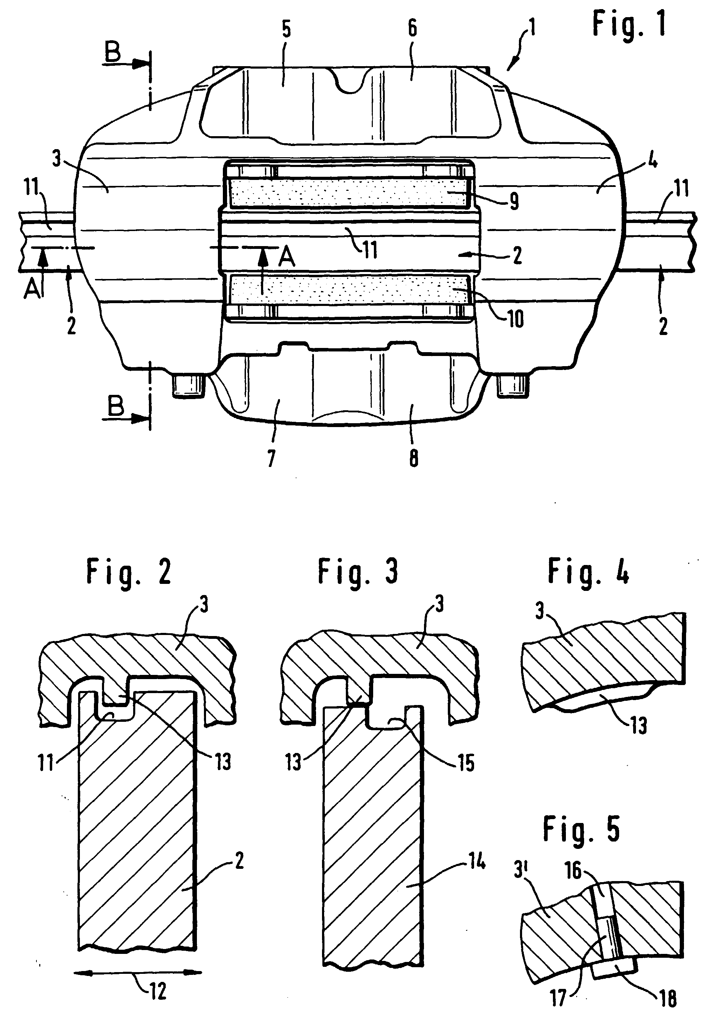

Die in Fig. 1 dargestellte Scheibenbremse besteht im wesentlichen aus einem am Achsschenkel des Fahrzeug festverschraubten Bremssattels 1, der den äußeren Rand einer Bremsscheibe 2 umgreift. Der Bremssattel 1 besitzt zwei Brückenabschnitte 3,4 die in unmittelbarer Nähe des Randes der Bremsscheibe 2 verlaufen. Der Bremssattel 1 ist weiterhin mit vier Bremszylindern 5,6,7,8 ausgestattet, in denen vier Bremskolben gleiten, die zum Andruck zweier Bremsbeläge 9,10 an die Axialseiten der Bremsscheibe 2 dienen. Die Bremscheibe 2 ist an ihrem äußeren Rand mit einer radial nach außen offenen, umlaufenden Ringnut 11 versehen, deren Lage in Axialrichtung 12 derart bestimmt ist, daß ein an den Brückenabschnitt 3 angegossener Vorsprung 13 radial nach innen in die Ringnut 11 hineinragt, ohne die Bremsscheibe 2 zu berühren. In Fig. 2 erkennt man diesen Sachverhalt bei Kombination des Bremssattels 1 mit der dazugehörigen Bremsscheibe 2.

In Fig. 3 ist dargestellt, was bei einer Kombination des Bremssattels 3 mit einer dünneren, für den Bremssattels 3 nicht vorgesehenen Bremsscheibe 14 passiert. Die andere Bremsscheibe 14 besitzt auch eine andere Ringnut 15, die sich in ihrer axialen Lage von der Ringnut 11 der Bremsscheibe 2 unterscheidet. Bei Kombination der falschen Bremsscheibe 14 mit dem Bremssattel 1 wird also der Vorsprung 13 des Brückenabschnitts 3 durch Anlage am äußeren Rand der Bremsscheibe 14 verhindern, daß der Bremssattel 1 in radialer Richtung in seine korrekte Einbaulage gebracht werden kann. Aufgrund der verschiedenen axialen Position des Vorsprungs 13 und der Ringnut 15 ist ein radiales Eingreifen des Vorsprungs 13 in die Ringnut 15 unmöglich.

In Fig. 4 erkennt man nochmals den am Brückenabschnitt 3 angegossenen Vorsprung 13 aus einer anderen Perspektive. Im übrigen kann der Vorsprung 13 genausogut am anderen Brückenabschnitt 4 oder an beiden Brückenabschnitten 3,4 angegossen sein.

In einer anderen Ausführungsform ist in dem modifizierten Brückenabschnitt 3' eine Bohrung 16 vorgesehen, in die ein Stift 17 eingesteckt und reibschlüssig befestigt ist. Das als Kopf ausgebildete eine Ende des Stiftes bildet hier einen Vorsprung 18 des Brückenabschnitts 3'.

## Patentansprüche

1. Festsattel-Scheibenbremse für Kraftfahrzeuge mit einem am Achsschenkel des Fahrzeuges starr befestigten Bremssattel (1), der den äußeren Rand einer Bremsscheibe (2) umgreift, wobei der über den Rand der Bremsscheibe ragende Brückenabschnitt (3,4) des Bremssattels (1) zumindest einen Vorsprung (13,18) besitzt, der radial nach innen in eine am Rand der Bremsscheibe (2) vorgesehene, radial nach außen offene Ringnut (11) hineinragt, ohne die Bremsscheibe (2) zu berühren, **dadurch gekennzeichnet**, daß zwischen Vorsprung (13,18) am Brückenabschnitt (3,4) und Ringnut (11) an der Bremsscheibe (2) ein schlüsselartiger Eingriff besteht, wobei die Ringnut (11) und der Vorsprung (13,18) typspezifisch derart aufeinander abgestimmt sind, daß ausschließlich zueinander gehörige Bremssättel (1) und Bremscheiben (2) miteinander kombinierbar sind.

2. Scheibenbremse nach Anspruch 1, dadurch **gekennzeichnet**, daß die axiale Position der Ringnut (11 bzw. 15) im Rand der Bremsscheibe (2 bzw. 14) und die daran angepaßte axiale Position des Vorsprungs (13,18) in Abhängigkeit von der axialen Abmessung der Bremsscheibe (2 bzw. 14) bestimmt ist.

3. Scheibenbremse nach Anspruch 1 oder 2, dadurch **gekennzeichnet**, daß der radiale Vorsprung (13) mit dem Brückenabschnitt (3) des Bremssattels (1) einstückig ausgebildet und vorzugsweise angegossen ist.

4. Scheibenbremse nach Anspruch 1 oder 2, dadurch **gekennzeichnet**, daß der radiale Vorsprung (18) als ein in einer Bohrung (16) des Brückenabschnitts (3') am Bremssattel (1) befestigter Stift (17) ausgeführt ist.

## Claims

1. Fixed-type caliper disc brake for automotive vehicles including a brake caliper (1) which is rigidly fixed to the steering knuckle of the vehicle and straddles the external edge of a brake disc (2), and the bridge portion (3, 4) of the brake caliper (1) projecting beyond the edge of the brake disc has at least one projection (13, 18) which extends radially inwardly into an annular groove (11) provided at the edge of the brake disc (2) without touching the brake disc (2), the said annular groove being open in a radially outward direction,
**characterized** in that a key-type engagement is constituted between the projection (13, 18) on the bridge portion (3, 4) and the annular groove (11) in the brake disc (2), and the types of the annular groove (11) and the projection (13, 18) are specifically conformed to each other such that exclusively mating brake calipers (1) and brake discs (2) can be combined with each other.

2. Disc brake as claimed in claim 1,
**characterized** in that the axial position of the annular groove (11 and 15, respectively) in the edge of the brake disc (2 and 14, respectively) and the axial position of the projection (13, 18) conformed thereto is determined in dependence on the axial dimension of the brake disc (2 and 14, respectively).

3. Disc brake as claimed in claim 1 or claim 2,
**characterized** in that the radial projection (13) is integrally designed with, and preferably cast with, the bridge portion (3) of the brake caliper (1).

4. Disc brake as claimed in claim 1 or claim 2,
**characterized** in that the radial projection (18) is configured as a pin (17) which is attached in a bore (16) in the bridge portion (3') of the brake caliper (1).

## Revendications

1. Frein à disque à étrier fixe pour des véhicules automotives comportant un étrier à frein (1) rigidement raccordé à la fusée d'essieu du véhicule et entournant le bord extérieur d'un disque de frein (2), la section du pont (3,4) d'étrier à frein (1) faisant saillie sur le bord du disque de frein comportant au moins une saillie (13,18) s'éxtendant radialemen vers l'intérieur dans une rainure annulaire (11) ouverte radialement vers l'extérieur et prévue au bord du disque de frein (2) sans toucher le disque de frein (2), caractérisé en ce qu'il existe un engrènement sous forme de clé entre la saillie (13,18) à la section du pont (3,4) et la rainure annulaire (11) au disque de frein (2), les types de la rainure annulaire (11) et de la saillie (13,18) conformant spécifiquement l'un à l'autre de sorte qu'exclusivement des étriers à frein (1) et des disques de frein (2) ajustés peuvent être combinés les uns avec les autres.

2. Frein à disque selon la revendication 1, caractérisé en ce que la position axial de la rainure annulaire (11 respectivement 15) dans le bord du disque de frein (2 respectivement 14) et la position axial de la saillie (13,18) conformé est déterminée en réponse de la dimension du disque de frein (2 respectivement 14).

3. Frein à disque selon les revendications 1 ou 2, caractérisé en ce que la saillie (13) radiale est formé d'une pièce - préférablement jointe par la fonte - avec la section du pont (3) d'étrier de frein.

4. Frein à disque selon les revendications 1 ou 2, caractérisé en ce que la saillie radiale (18) est formée comme une cheville (17) raccordée dans un alésage (16) dans la section du pont (3') de l'étrier de frein (1).
